# EUROPEAN PATENT APPLICATION

(11) **EP 4 516 868 A1**
(43) Date of publication of application: **05.03.2025**
(21) Application number: 23194774.8
(22) Date of filing: 01.09.2023
(51) Int. Cl.: C09J 5/00, C09J 9/02, C09J 11/04, C09J 11/06, C09J 163/00, H01M 10/653

(54) **CURABLE AND DEBONDABLE TWO-PART (2K) THERMALLY CONDUCTIVE ADHESIVE COMPOSITION**

(71) Applicant: Henkel AG & Co. KGaA, 40589 Düsseldorf (DE)
(72) Inventor: Fleck-Kunde, Tom, 40225 Düsseldorf (DE); Buga, Duygu, 41564 Kaarst (DE); Stapf, Stefanie, 45239 Essen (DE); Kamm, Thomas, 51371 Leverkusen (DE); Niegemeier, Andreas, 40764 Langenfeld (DE); Knauf, Lucas, 40882 Ratingen (DE); Reuther, Philipp, 40225 Düsseldorf (DE)

(57) **Abstract**

The present invention relates to a curable and debondable two-part thermally conductive adhesive composition comprising a first part comprising an epoxy resin; an electrolyte; and a thermally conductive filler; and a second part comprising a curing agent; and a thermally conductive filler, wherein the composition further comprises an electrically conductive filler. The composition according to the present invention can be used in battery modules of electric vehicles. And the composition according to the present invention facilitates faster repair and recycling of battery modules of electric vehicles.

## Description

### Technical field of the invention

The present invention relates to a curable and debondable two-part thermally conductive adhesive composition which, after curing, may bond substrates together and bear loads within a bonded composite structure, but which can also be debonded from the substrates to which it is applied.

### Background of the invention

Adhesive bonds and polymeric coatings are commonly used in the assembly and finishing of manufactured goods. They are used in place of mechanical fasteners, such as screws, bolts and rivets, to provide bonds with reduced machining costs and greater adaptability in the manufacturing process. Adhesive bonds distribute stresses evenly, reduce the possibility of fatigue and seal the joints from corrosive species.

Whilst adhesive bonds offer many advantages over mechanical fasteners, certain disadvantages must also be acknowledged. Firstly, it tends to be difficult to disassemble adhesively bonded objects where this is required in practical applications. Secondly, when an adhesive has been cured *in situ* to bond two substrates together, a cross-linked chemical network is formed: after disassembly of the adhesively bonded objects, that chemical network can in most circumstances not be re-used as an adhesive. These disadvantages have obviously been thrown into focus in those - often resource intensive - industries where it would be beneficial to recycle, re-use or re-purpose manufactured goods.

With regards to the first identified disadvantage, the removal of the adhesive through mechanical processes - such as by sand blasting or by wire brushing - is often precluded, in part because the adhesive is deposited between substrates and is thus either inaccessible or difficult to abrade without corrupting the substrate surfaces. Disassembly through the application of chemicals and / or high temperature might be effective but can be time consuming and complex to perform, particularly if one wishes to preserve a substrate surface having residual adhesive disposed thereof: the aggressive chemicals and / or harsh conditions required will often remove substantially all the adhesive and cause damage to the substrates being separated, rendering them unsuitable for subsequent applications.

State of the art structural thermally conductive adhesives are not electrochemically or thermally debondable. Several electrochemically debondable adhesive compositions based on different chemistries have been developed for various applications in recent years. Including a system for electrically debonding a battery from an electronic device comprising an electro-adhesive layer within a coupling between the battery and the electronic device. However, these developments are not useful when thermal conductivity is required.

Therefore, despite the advantageous development of electrochemically debondable adhesive compositions, there is still a need for a curable and debondable thermally conductive adhesive composition.

### Summary of the invention

The present invention relates to a curable and debondable two-part thermally conductive adhesive composition comprising a first part comprising a) an epoxy resin; b) from 0.1 to 20% by weight based on the total weight of the first part of an electrolyte, wherein the electrolyte is selected from the group consisting of 1-ethyl-3-methyl-imidazolium methyl sulfate, tributyl(ethyl)phosphonium diethyl phosphate, mixture of choline chloride and ethylene glycol and mixtures thereof; and c) a thermally conductive filler; and a second part comprising a) a curing agent; b) a thermally conductive filler, wherein the composition further comprises an electrically conductive filler, wherein the electrically conductive filler is i) from 0.02 to 0.3% by weight based on the total weight of the composition of carbon nanostructures or carbon nanotubes; or ii) from 12 to 17% by weight based on the total weight of the composition of spherical graphite; or iii) from 1 to 4% by weight based on the total weight of the composition of graphite flakes.

The present invention also relates to use of a curable and debondable two-part thermally conductive adhesive composition according to the present invention in battery modules in electric vehicles, electronic devices, and electronic components.

The present invention encompasses a bonded structure comprising: a first material layer having an electrically conductive surface; and a second material layer having an electrically conductive surface; wherein the curable and debondable two-part thermally conductive adhesive composition according to the present invention is disposed between the first and second material layers.

The present invention also encompasses a method of debonding said bonded structure according to the present invention, the method comprising the steps of: i) applying a voltage across both surfaces to form an anodic interface and a cathodic interface; and, ii) debonding the surfaces.

### Short description of the figures

Figure 1a illustrates a bonded structure according to the present invention.
Figure 1b illustrates a bonded structure according to the present invention.
Figure 2a illustrates the initial debonding of the bonded structure according to the present invention upon passage of a current across that structure.
Figure 2b illustrates the initial debonding of the bonded structure according to the present invention upon passage of a current across that structure.

### Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of' as used herein are synonymous with "including", "includes" or "containing", "contains", and are inclusive or open-ended and do not exclude additional, non-recited members, elements or method steps.

As used herein, the term "*consisting of*" excludes any element, ingredient, member or method step not specified.

The words "*preferred*", "*preferably*", "*desirably*" and "*particularly*" are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word "*may*" is used in a permissive sense - that is meaning to have the potential to - rather than in the mandatory sense.

As used herein, the term "*epoxide*" denotes a compound characterized by the presence of at least one cyclic ether group, namely one wherein an ether oxygen atom is attached to two adjacent carbon atoms thereby forming a cyclic structure. The term is intended to encompass monoepoxide compounds, polyepoxide compounds (having two or more epoxide groups) and epoxide terminated prepolymers. The term "*monoepoxide compound*" is meant to denote epoxide compounds having one epoxy group. The term "*polyepoxide compound*" is meant to denote epoxide compounds having at least two epoxy groups. The term "*diepoxide compound*" is meant to denote epoxide compounds having two epoxy groups.

The epoxide may be unsubstituted but may also be inertly substituted. Exemplary inert substituents include chlorine, bromine, fluorine and phenyl.

The recitation of numerical end points includes all numbers and fractions subsumed within the respective ranges, as well as the recited end points.

All percentages, parts, proportions and then like mentioned herein are based on weight unless otherwise indicated.

When an amount, a concentration or other values or parameters is/are expressed in form of a range, a preferable range, or a preferable upper limit value and a preferable lower limit value, it should be understood as that any ranges obtained by combining any upper limit or preferable value with any lower limit or preferable value are specifically disclosed, without considering whether the obtained ranges are clearly mentioned in the context.

The term "*electrolyte*" is used herein in accordance with its standard meaning in the art as a substance containing free ions which can conduct electricity by displacement of charged carrier species. The term is intended to encompass molten electrolytes, liquid electrolytes, semi-solid electrolytes and solid electrolytes wherein at least one of the cationic or anionic components of their electrolyte structure is essentially free for displacement, thus acting as charge carrier.

The curable thermally conductive adhesive compositions of the present invention and the cured adhesives obtained therefrom possess "*electrolyte functionality*" in that the adhesive material permits the conduction of ions, either anions, cations or both. The electrolyte functionality is understood to derive from the ability of the compositions and cured adhesives to solvate ions of at least one polarity.

As used herein, room temperature is 23°C plus or minus 2°C. As used herein, "*ambient conditions*" means the temperature and pressure of the surroundings in which the composition is located or in which a coating layer or the substrate of said coating layer is located.

*"Two-part (2K) compositions"* in the context of the present invention are understood to be compositions in which a first part (A) and a second part (B) must be stored in separate vessels because of their (high) reactivity. The two parts are mixed only shortly before application and then react, typically without additional activation, with bond formation and thereby formation of a polymeric network. Herein higher temperatures may be applied in order to accelerate the cross-linking reaction.

*"One-part (1K) compositions",* in the context of the present invention are understood to be compositions in which the resin to be cured is stored together with the curing agent (i.e. one component). This requires that the curing agent is not (re-)active under storage conditions.

As used herein the term "*debondable*" means that, after curing of the adhesive, the bond strength can be weakened by at least 50% upon application of an electrical potential of from 10V - 75V for a duration of from 1s to 60 minutes. The cured adhesive is applied between two substrates which are bonded by said adhesive so that an electric current is running through the adhesive bond line. Bond strength is measured by Tensile Lap Shear (TLS) test performed at room temperature and based upon EN 1465:2009 (German version) *Based on Adhesives* - *Determination of tensile lap-shear strength of bonded assemblies.* The bond overlapping area was 20 mm × 10 mm with a bond thickness of about 1000 µm.

All references cited in the present specification are hereby incorporated by reference in their entirety.

Unless otherwise defined, all terms used in disclosing the invention, including technical and scientific terms, have the meaning as commonly understood by one of the ordinary skilled in the art to which this invention belongs to. By means of further guidance, term definitions are included to better appreciate the teaching of the present invention.

The present invention relates to a curable and debondable two-part thermally conductive adhesive composition comprising a first part comprising a) an epoxy resin; b) from 0.1 to 20% by weight based on the total weight of the first part of an electrolyte, wherein the electrolyte is selected from the group consisting of 1-ethyl-3-methyl-imidazolium methyl sulfate, tributyl(ethyl)phosphonium diethyl phosphate, mixture of choline chloride and ethylene glycol and mixtures thereof; and c) a thermally conductive filler; and a second part comprising a) a curing agent; b) a thermally conductive filler, wherein the composition further comprises an electrically conductive filler, wherein the electrically conductive filler is i) from 0.02 to 0.3% by weight based on the total weight of the composition of carbon nanostructures or carbon nanotubes; or ii) from 12 to 17% by weight based on the total weight of the composition of spherical graphite; or iii) from 1 to 4% by weight based on the total weight of the composition of graphite flakes.

The Applicant has found that the curable and debondable thermally conductive adhesive composition according to the present invention provides high adhesion strength and high thermal conductivity, while the adhesive bond can be debonded by application of electric stimulus.

The first part of the composition comprises an epoxy resin.

Epoxy resins as used herein may include mono-functional epoxy resins, multi- or poly-functional epoxy resins, and combinations thereof. The epoxy resins may be pure compounds but equally may be mixtures epoxy functional compounds, including mixtures of compounds having different numbers of epoxy groups per molecule. An epoxy resin may be saturated or unsaturated, aliphatic, cycloaliphatic, aromatic or heterocyclic and may be substituted. Further, the epoxy resin may also be monomeric or polymeric.

Without intention to limit the present invention, illustrative monoepoxide compounds include: alkylene oxides; epoxy-substituted cycloaliphatic hydrocarbons, such as cyclohexene oxide, vinylcyclohexene monoxide, (+)-cis-limonene oxide, (+)-cis,trans-limonene oxide, (-)-cis,trans-limonene oxide, cyclooctene oxide, cyclododecene oxide and α-pinene oxide; epoxy-substituted aromatic hydrocarbons; monoepoxy substituted alkyl ethers of monohydric alcohols or phenols, such as the glycidyl ethers of aliphatic, cycloaliphatic and aromatic alcohols; monoepoxy-substituted alkyl esters of monocarboxylic acids, such as glycidyl esters of aliphatic, cycloaliphatic and aromatic monocarboxylic acids; monoepoxy-substituted alkyl esters of polycarboxylic acids wherein the other carboxy group(s) are esterified with alkanols; alkyl and alkenyl esters of epoxy-substituted monocarboxylic acids; epoxyalkyl ethers of polyhydric alcohols wherein the other OH group(s) are esterified or etherified with carboxylic acids or alcohols; and, monoesters of polyhydric alcohols and epoxy monocarboxylic acids, wherein the other OH group(s) are esterified or etherified with carboxylic acids or alcohols.

By way of example, the following glycidyl ethers might be mentioned as being particularly suitable monoepoxide compounds for use herein: methyl glycidyl ether; ethyl glycidyl ether; propyl glycidyl ether; butyl glycidyl ether; pentyl glycidyl ether; hexyl glycidyl ether; cyclohexyl glycidyl ether; octyl glycidyl ether; 2-ethylhexyl glycidyl ether; allyl glycidyl ether; benzyl glycidyl ether; phenyl glycidyl ether; 4-tert-butylphenyl glycidyl ether; 1-naphthyl glycidyl ether; 2-naphthyl glycidyl ether; 2-chlorophenyl glycidyl ether; 4-chlorophenyl glycidyl ether; 4-bromophenyl glycidyl ether; 2,4,6-trichlorophenyl glycidyl ether; 2,4,6-tribromophenyl glycidyl ether; pentafluorophenyl glycidyl ether; o-cresyl glycidyl ether; m-cresyl glycidyl ether; and, p-cresyl glycidyl ether.

In an embodiment, the monoepoxide compound conforms to Formula (I) herein below: 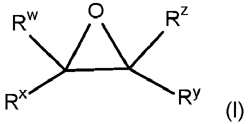 wherein: R^{w}, R^{x}, R^{y} and R^{z} may be the same or different and are independently selected from hydrogen, a halogen atom, a C₁-C₈ alkyl group, a C₃ to C₁₀ cycloalkyl group, a C₂-C₁₂ alkenyl, a C₆-C₁₈ aryl group or a C₇-C₁₈ aralkyl group, with the proviso that at least one of R^{y} and R^{z} is not hydrogen.

It is preferred that R^{w}, R^{x} and R^{y} are hydrogen and R^{z} is either a phenyl group or a C₁-C₈ alkyl group and, more preferably, a C₁-C₄ alkyl group.

Having regard to this embodiment, exemplary monoepoxides include: ethylene oxide; 1,2-propylene oxide (*propylene oxide*); 1,2-butylene oxide; cis-2,3-epoxybutane; trans-2,3-epoxybutane; 1,2-epoxypentane; 1,2-epoxyhexane; 1,2-heptylene oxide; decene oxide; butadiene oxide; isoprene oxide; and, styrene oxide.

In the present invention, reference is made to using at least one monoepoxide compound selected from the group consisting of: ethylene oxide; propylene oxide; cyclohexene oxide; (+)-cis-limonene oxide; (+)-cis,trans-limonene oxide; (-)-cis,trans-limonene oxide; cyclooctene oxide; and, cyclododecene oxide.

Again, without intention to limit the present invention, suitable polyepoxide compounds may be liquid, solid or in solution in solvent. Further, such polyepoxide compounds should have an epoxide equivalent weight of from 100 to 700 g/eq, for example from 120 to 320 g/eq. And generally, diepoxide compounds having epoxide equivalent weights of less than 500 g/eq. or even less than 400 g/eq. are preferred: this is predominantly from a costs standpoint, as in their production, lower molecular weight epoxy resins require more limited processing in purification.

As examples of types or groups of polyepoxide compounds which may be polymerized in present invention, mention may be made of: glycidyl ethers of polyhydric alcohols and polyhydric phenols; glycidyl esters of polycarboxylic acids; and, epoxidized polyethylenically unsaturated hydrocarbons, esters, ethers and amides.

Suitable diglycidyl ether compounds may be aromatic, aliphatic or cycloaliphatic in nature and, as such, can be derivable from dihydric phenols and dihydric alcohols. And useful classes of such diglycidyl ethers are: diglycidyl ethers of aliphatic and cycloaliphatic diols, such as 1,2-ethanediol, 1,4-butanediol, 1,6-hexanediol, 1,8-octanediol, 1,12-dodecanediol, cyclopentane diol and cyclohexane diol; bisphenol A based diglycidylethers; bisphenol F diglycidyl ethers; diglycidyl o-phthalate, diglycidyl isophthalate and diglycidyl terephthalate; polyalkyleneglycol based diglycidyl ethers, in particular polypropyleneglycol diglycidyl ethers; and, polycarbonatediol based glycidyl ethers. Other suitable diepoxides which might also be mentioned include: diepoxides of double unsaturated fatty acid C₁-C₁₈ alkyl esters; butadiene diepoxide; polybutadiene diglycidyl ether; vinylcyclohexene diepoxide; and, limonene diepoxide.

Further illustrative polyepoxide compounds include but are not limited to: glycerol polyglycidyl ether; trimethylolpropane polyglycidyl ether; pentaerythritol polyglycidyl ether; diglycerol polyglycidyl ether; polyglycerol polyglycidyl ether; and, sorbitol polyglycidyl ether.

The epoxy resin is preferably selected from the group consisting of bis-phenol A epoxy resin, bis-phenol F epoxy resin, mixture of bis-phenol A epoxy resin and bis-phenol F epoxy resin, cycloaliphatic epoxy resin and mixtures thereof, more preferably the epoxy resin is bis-phenol A epoxy resin.

Bis-phenol A epoxy resin is preferred because it has shown good storage stability properties.

Suitable commercially available epoxy resins for use in the present invention include but are not limited to Kukdo YD 128 from Kukdo Chemical (Kunshan) Co. Ltd. and D.E.R. 331 from Olin.

The epoxy resin may be present in an amount from 2 to 10% by weight of the total weight of the first part of the composition, preferably from 3 to 9% and more preferably from 4 to 8%.

These epoxy resin quantities are preferred because quantity greater than 10% may adversely affect the thermal conductivity of the adhesive, whereas low quantities, mainly below 2% may lead to decrease in initial adhesion properties, viscosity and cohesive properties.

The first part of the composition comprises an electrolyte.

The electrolyte comprises or consists of at least one salt in accordance with Formula (I) or Formula (II) or Formula (III): 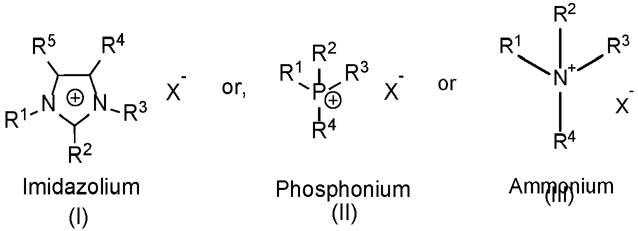 wherein:
R¹, R², R³, R⁴ and R⁵ are independently selected from hydrogen, C₁-C₁₈ alkyl, C₃-C₁₈ cycloalkyl, C₆-C₁₈ aryl, C₇-C₂₄ aralkyl, C₂-C₂₀ alkenyl, C₁-C₁₈ hydroxyalkyl, - C(O)R^{q}, -C(O)OH, -CN or -NO₂;
R^{q} is C₁-C₆ alkyl; and,
X⁻ is a counter anion.

There is no particular intention to limit the counter anion (X-) which may be employed in the electrolyte. Exemplary anions may be selected from:
- Halides;
- Pseudohalides and halogen-containing compounds of the formulae PF₆ ⁻, CF₃SO₃ ⁻, (CF₃SO₃)₂N⁻, CF₃CO₂ ⁻ and CCl₃CO₂ ⁻,
- CN⁻, SCN⁻ and OCN⁻;
- Phenates;
- Sulfates, sulfites and sulfonates of the general formulae SO₄ ²⁻, HSO₄ ⁻, SO₃ ²⁻, HSO₃⁻, R^{a}OSO₃ ⁻ and R^{a}SO₃ ⁻;
- Phosphates of the general formulae PO₄ ³⁻, HPO₄ ²⁻, H₂PO₄ ⁻, R^{a}PO₄ ²⁻, HR^{a}PO₄ ⁻ and R^{a}R^{b}PO₄ ⁻;
- Phosphonates and phosphinates of the general formulae R^{a}HPO₃ ⁻,R^{a}R^{b}PO₃ ⁻ and R^{a}R^{b}PO₃ ⁻;
- Phosphites of the general formulae: PO₃ ³⁻, HPO₃ ²⁻, H₂PO₃ ⁻, R^{a}PO₃ ²⁻, R^{a}HPO₃ ⁻ and R^{a}R^{b}PO₃ ⁻;
- Phosphonites and phosphinites of the general formulae R^{a}R^{b}PO₂ ⁻, R^{a}HPO₂ ⁻, R^{a}R^{b}PO⁻ and R^{a}HPO⁻;
- Carboxylic acid anions of the general formula R^{a}COO⁻;
- Hydroxycarboxylic acids anions and sugar acid anions;
- Saccharinates (salts of o-benzoic acid sulfimide);
- Borates of the general formulae BO₃ ³⁻, HBO₃ ²⁻, H₂BO₃ ⁻, R^{a}R^{b}BO₃ ⁻, R^{a}HBO₃ ⁻, R^{a}BO₃ ²⁻, B(OR^{a})(OR^{b})(OR^{c})(OR^{d})⁻, B(HSO₄)⁻ and B(R^{a}SO₄)⁻;
- Boronates of the general formulae R^{a}BO₂ ²⁻ and R^{a}R^{b}BO⁻;
- Carbonates and carbonic acid esters of the general formulae HCO₃ ⁻, CO₃ ²- and R^{a}CO₃ ⁻;
- Silicates and silicic acid esters of the general formulae SiO₄ ⁴⁻, HSiO₄ ³⁻, H₂SiO₄ ²⁻, H₃SiO₄ ⁻, R^{a}SiO₄ ³⁻, R^{a}R^{b}SiO₄ ²⁻, R^{a}R^{b}R^{c}SiO₄ ⁻, HR^{a}SiO₄ ²⁻, H₂R^{a}SiO₄ ⁻ and HR^{a}R^{b}SiO₄ ⁻;
- Alkyl- and arylsilanolates of the general formulae R^{a}SiO₃ ³⁻, R^{a}R^{b}SiO₂ ²⁻, R^{a}R^{b}R^{c}SiO⁻, R^{a}R^{b}R^{c}SiO₃ ⁻, R^{a}R^{b}R^{c}SiO₂ - and R^{a}R^{b}SiO₃ ²⁻;
- Pyridinates and pyrimidinates;
- Carboxylic acid imides, bis(sulfonyl)imides and sulfonylimides of the general formulae: 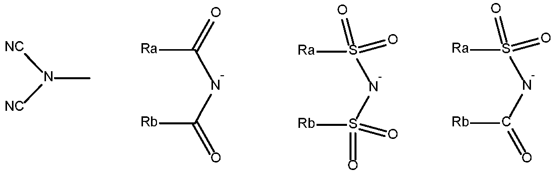
- Methides of the general formula: 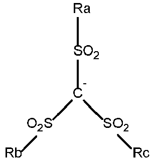
- Alkoxides and aryloxides of the general formula R^{a}O⁻; and,
- Sulfides, hydrogen sulfides, polysulfides, hydrogen polysulfides and thiolates of the general formulae S²⁻, HS⁻, [Sᵥ]²⁻, [HSᵥ]⁻ and [R^{a}S]⁻
in which general formulae
v is a whole positive number of from 2 to 10.
R^{a}, R^{b}, R^{c} and R^{d} are independently selected from hydrogen, a C₁-C₁₂ alkyl, C₅-C₁₂ cycloalkyl, C₅-C₁₂ heterocycloalkyl, C₆-C₁₈ aryl and C₅-C₁₈ heteroaryl.

The electrolyte is selected from the group consisting of 1-ethyl-3-methyl-imidazolium methyl sulfate, tributyl(ethyl)phosphonium diethyl phosphate, mixture of choline chloride and ethylene glycol and mixtures thereof.

The preferred electrolytes provide good debonding effect in a thermally conductive composition.

Suitable commercially available electrolytes for use in the present invention include but are not limited to 1-ethyl-3-methylimidazolium methyl sulphate (EMIM MS) from Basionics, ethaline from Henkel and Cyphos IL 169 from Solvay.

The electrolyte is present in an amount from 0.1 to 20% by weight of the total weight of the first part of the composition, preferably from 0.5 to 18%, more preferably from 0.75 to 17% and even more preferably from 1 to 16%.

These quantities are preferred because quantity greater than 20% of electrolyte may lead to a good debonding effect, however the cure may be incomplete and therefore, initial adhesive properties may be adversely affected, whereas too low quantities may lead to a lack of debonding effect.

Thermally conductive filler is present in both first and second parts of the composition. Thermally conductive filler may consist of only one type of filler or may be a mixture of two more different kind of fillers.

The thermally conductive filler in the first part and the second part may be same or different and independently selected from the group consisting of aluminium hydroxide, aluminium oxide, aluminium oxide-hydroxide, boron nitride, magnesia, zinc oxide, graphene, graphite, silica, fumed silica, talc, chalk, calcium carbonate and mixtures thereof, preferably the thermally conductive filler is selected from aluminium hydroxide, aluminium oxide and mixtures thereof.

The above thermally conductive fillers are preferred because they provide ideal thermal conductivity to loading ratio.

The suitable thermally conductive fillers may also be coated. The coating further reduce the viscosity of the composition, and therefore may allow higher thermally conductive filler loadings.

Typical particle sizes for the thermally conductive fillers for constructive adhesive applications are from 30 µm to 110 µm. For applications which require a thin film, suitable particle sizes are from 5 µm to 50 µm. Thermal fillers suitable for use in the present invention may have the particle size from 80 µm to 100 µm, preferably from 85 µm to 95 µm, wherein the particle size is measured by the laser diffractometry.

As used above, the term "particle size" in context with thermally conductive fillers refers to the D₉₀ value of the cumulative volume distribution curve at which 90% by volume of the particles have a diameter less than said value. The average particle size is measured in the present invention through laser diffractometry preferably using Microtrac S3000/S3500 available from Microtrac MRB. In this technique, the size of particles in suspensions or emulsions is measured using the diffraction of a laser beam, based on application of Mie theory. In the present invention, Mie theory or a modified Mie theory for non-spherical particles is applied and the particle sizes relate to scattering measurements at an angle from 0.02 to 135 degrees relative to the incident laser beam.

The particle size of the thermally conductive filler mainly impacts the viscosity, smaller the particle size, higher the viscosity, therefore, the particle size may have a direct impact on maximum filler loading and thermal conductivity.

Suitable commercially available thermally conductive fillers for use in the present invention include but are not limited Martinal TM 2590 from Huber Martinswerk and SFADW-45 from CMP Advanced Materails.

The thermally conductive filler may be present in the first part of the composition in an amount of from 40 to 90 by weight of the total weight of the first part, preferably from 42 to 87% and more preferably from 45 to 83%.

The thermally conductive filler may be present in the second part of the composition in an amount of from 70 to 90% by weight of the total weight of the second part, preferably from 80 to 90%, and more preferably from 83 to 88%.

These quantities are preferred because quantity greater than 90% of thermally conductive filler may lead to a good thermal conductivity, however the initial adhesive properties may be adversely affected, whereas too low quantities may lead to a poor thermal conductivity.

The second part of the composition comprises a curing agent.

The curing agent necessarily consists of at least one compound possessing at least two epoxide reactive groups per molecule. Curing agents may, in particular, include one or more of: i) at least one polyamine having at least two amine hydrogens reactive toward epoxide groups; ii) at least one tertiary polyamide compound having at least two amine hydrogens reactive toward epoxide groups; iii) at least one polyamine compound having at least two amine hydrogens reactive toward epoxide groups; iv) at least one poly(amidoamine) compound having at least two amine hydrogens reactive toward epoxide; and v) at least one polyetheramine compound having at least two amine hydrogens reactive toward epoxide.

Examples of suitable curing agents for use in the present invention may include 9,12-octadecadienoic acid (9Z,12Z)-, dimer, polymer with 3,3-oxybis(2,1-ethanediyloxy)bis1-propanamine, condensation product of a dimer acid and diethylene glycol diamino propyl ether, 2,4,6-tris-(diomethylaminomethyl)phenol, and mixtures thereof.

Suitable commercially available curing agents for use in the present invention include but are not limited to Ancamide 910 and Ancamide K54 from Evonik.

The curing agent may be present in an amount from 10 to 20% by weight of the total weight of the second part of the composition, preferably from 11 to 18% and more preferably from 12 to 16%.

The above-mentioned quantity range is based on the quantity of the epoxy resin in the first part of the composition, and is preferred because it may lead to a complete reaction, without unreacted epoxy resin present in the composition.

The first part and/or the second part of the composition comprises an electrically conductive filler. The electrically conductive filler is selected from i) carbon nanostructures or carbon nanotubes; ii) spherical graphite and iii) graphite flakes.

Suitable carbon nanostructures and carbon nanotubes for use in the present invention may have the tube diameters preferably from 1 nm to 25 nm, preferably from 2 nm to 20 nm and more preferably from 3 nm to 15 nm, wherein the particle size is measured by laser diffractometry.

Suitable spherical graphite for use in the present invention may have the particle size preferably from 10 µm to 30 µm, preferably from 12 to 29 µm, and more preferably from 15 µm to 28 µm, wherein the particle size is measured by laser diffractometry.

Suitable graphite flakes for use in the present invention may have the particle size preferably from 40 µm to 120 µm, preferably from 60 to 100 µm, and more preferably from 70 µm to 90 µm wherein the particle size is measured by laser diffractometry.

The particle size of the electrically conductive filler mainly impacts the viscosity, smaller the particle size higher the viscosity. Therefore, the particle size may have a direct impact on maximum filler loading and the electrical conductivity.

As used above, the term "particle size" in context with electrically conductive fillers refers to the D₅₀ value of the cumulative volume distribution curve at which 50% by volume of the particles have a diameter less than said value. The average particle size is measured in the present invention through laser diffractometry preferably using Microtrac S3000/S3500 available from Microtrac MRB. In this technique, the size of particles in suspensions or emulsions is measured using the diffraction of a laser beam, based on application of Mie theory. In the present invention, Mie theory or a modified Mie theory for non-spherical particles is applied and the particle sizes relate to scattering measurements at an angle from 0.02 to 135 degrees relative to the incident laser beam.

Suitable commercially available electrically conductive fillers for use in the present invention include but are not limited to GPX801 from Cabot, SG 22 from Unimate and Timrex C-Therm 011 from Imerys.

Carbon nanostructures or carbon nanotubes, when present, are comprised in an amount from 0.02 to 0.3% by weight based on the total weight of the composition, preferably from 0.03 to 0.2%.

Spherical graphite, when present, is comprised in an amount from 12 to 17% by weight based on the total weight of the composition, preferably from 13 to 16%.

Graphite flakes, when present, are comprised in an amount from 1 to 4% by weight based on the total weight of the composition, preferably from 1.5 to 3.5%.

These quantities are preferred because too high quantities of electrically conductive particles may adversely affect the rheology of the composition, whereas too low quantities may lead to a poor debonding effect.

The composition according to the present invention may further comprise core shell rubber particles. The core-shell rubber particles may be dispersed in the resin matrix. The core shell rubber particles may be present in the first part and/or in the second part of the composition and can be same or different in the first and second parts of the composition.

The term "*core shell rubber*" or CSR is being employed in accordance with its standard meaning in the art as denoting a rubber particle core formed by a polymer comprising an elastomeric or rubbery polymer as a main ingredient and a shell layer formed by a polymer which is graft polymerized onto the core. The shell layer partially or entirely covers the surface of the rubber particle core in the graft polymerization process. By weight, the core should constitute at least 50 wt.% of the core-shell rubber particle.

The polymeric material of the core should have a glass transition temperature (T_{g}) of no greater than 0°C and preferably a glass transition temperature (T_{g}) of -20°C or lower, more preferably -40°C or lower and even more preferably -60°C or lower. The polymer of the shell is non-elastomeric, thermoplastic or thermoset polymer having a glass transition temperature (T_{g}) of greater than room temperature, preferably greater than 30°C and more preferably greater than 50°C.

Without intention to limit the invention, the core may be comprised of: a diene homopolymer, for example, a homopolymer of butadiene or isoprene; a diene copolymer, for example a copolymer of butadiene or isoprene with one or more ethylenically unsaturated monomers, such as vinyl aromatic monomers, (meth)acrylonitrile or (meth)acrylates; polymers based on (meth)acrylic acid ester monomers, such as polybutylacrylate; and, polysiloxane elastomers such as polydimethylsiloxane and crosslinked polydimethylsiloxane.

Similarly, without intention to limit the present invention, the shell may be comprised of a polymer or copolymer of one or more monomers selected from: (meth)acrylates, such as methyl methacrylate; vinyl aromatic monomers, such as styrene; vinyl cyanides, such as acrylonitrile; unsaturated acids and anhydrides, such as acrylic acid; and, (meth)acrylamides. The polymer or copolymer used in the shell may possess acid groups that are cross-linked ionically through metal carboxylate formation, in particular through forming salts of divalent metal cations. The shell polymer or copolymer may also be covalently cross-linked by monomers having two or more double bonds per molecule.

It is preferred that any included core-shell rubber particles have an average particle size (d50) of from 10nm to 300nm, for example from 50 nm to 250 nm: said particle size refers to the diameter or largest dimension of a particle in a distribution of particles and is measured via dynamic light scattering. For completeness, the present application does not preclude the presence of two or more types of core shell rubber (CSR) particles with different particle size distributions in the composition to provide a balance of key properties of the resultant cured product, including shear strength, peel strength and resin fracture toughness.

Suitable commercially available core shell rubber particles for use in the present invention include but are not limited to Kane Ace MX-154 from Kaneka, Paraloid EXL 2650A, EXL 2655 and EXL2691 A, available from The Dow Chemical Company; Clearstrength^{®} XT100, available from Arkema Inc.; and the Kane Ace^{®} MX series available from Kaneka Corporation, and in particular MX 120, MX 125, MX 130, MX 136, MX 154, MX 551, MX553.

The core shell rubber particles may be present in an amount from 0.1 to 10% by weight of the total weight of the first part or a second part of the composition, preferably from 0.5 to 8% and more preferably from 1 to 7%.

The above range is preferred because less than 0.1% of the core shell rubber particles may not result in any technical benefit, whereas more than 10% may lead too high viscosity of the composition.

The composition according to the present invention may further comprise a reactive diluent. The reactive diluent may be present in the first part and/or in the second part of the composition and can be same or different in the first and second parts of the composition.

Suitable reactive diluents for use in the present invention are for example methyl ethyl ketone (MEK), dimethylformamide (DMF), ethyl alcohol, propylene glycol methyl ether, propylene glycol methyl ether acetate, dibutyl phthalate, dioctyl phthalate, styrene, low molecular weight polystyrene, styrene oxide, allyl glycidyl ether, phenyl glycidyl ether, butyl glycidyl ether, vinylcyclohexene oxide, neopentylglycol diglycidyl ether, butanediol diglycidyl ether, hexanediol diglycidyl ether, diethylene glycol diglycidyl ether, dipropylene glycol diglycidyl ether polypropylene glycol) diglycidyl ether, thiodiglycol diglycidyl ether, cardanol glycidyl ether, epsiloncaprolactam, butyrolactone, acrylonitrile, and mixtures thereof.

Examples of commercially available reactive diluents include but are not limited to DER 732, DER 736 from Palmer Holland, Cardolite NC 513 from Cardura E10P from Exion and Efka 5381 from BASF.

The reactive diluent may be present in an amount from 1 to 15% by weight of the total weight of the first part or a second part of the composition, preferably from 2 to 12% and more preferably from 3 to 7%.

These quantities are preferred because too low quantity may lead to cohesion failures and decreased adhesion strength, while too high quantity may lead to too fast cure and adversely effect on open time.

The composition according to the present invention may further comprise a silane coupling agent. The silane coupling agent may be present in the first part and/or in the second part of the composition and can be same or different in the first and second parts of the composition.

Suitable silane coupling agents for use in the present invention, include, but are not limited to γ-aminopropyltrietho xysilane, γ-mercaptopropyltrimethoxysilane, γ-methacryloxypropyltrimethoxysilane, γ-glycidoxypropyl-trimethoxylsilane, phenyltrimethoxysilane, and the like.

Examples of commercially available silane coupling agents include but are not limited to Silquest A-186, Silquest A-187, Silquest A-1110, Silquest A-1120, Silquest A-1170, Silquest A-2120, from Momentive.

The silane coupling agent may be present in an amount from 0.01 to 3% by weight of the total weight of the first part or a second part of the compostion, preferably from 0.05 to 2% and more preferably from 0.1 to 1%.

The above quantities are preferred because they improve the adhesion properties of the composition.

To form the defined two-part thermally conductive curable and debondable compositions, the reactive parts are brought together and mixed in such a manner as to induce the hardening thereof. The reactive compounds should be mixed under sufficient shear forces to yield a homogeneous mixture. It is considered that this can be achieved without special conditions or special equipment. That said, suitable mixing devices might include: static mixing devices; magnetic stir bar apparatuses; wire whisk devices; augers; speed mixer; batch mixers; planetary mixers; C.W. Brabender or Banburry^{®} style mixers; and, high shear mixers, such as blade-style blenders and rotary impellers.

The first and second parts of the composition will conventionally be mixed in amounts by weight which achieve the desired ratio of epoxide groups to epoxide-reactive groups. Preferably, the first part and the second part are mixed in ratio of from 1.1:1 to 1:1.1, preferably from 1.05:1 to 1:1.05 and more preferably 1:1, wherein the ratio is a stoichiometric ratio.

The composition according to the present invention has preferably thermal conductivity higher than 1.20 W/mK. Thermal conductivity is measured according to ASTM D5930-01.

The composition according to the present invention has preferably volume resistivity from 1.0 E+6 to 1.0 E+4, wherein the volume resistivity is measured according to the test method described in the examples section.

The present invention encompasses use of a curable and debondable two-part thermally conductive adhesive composition according to the present invention in battery modules of electric vehicles, electronic devices, and electronic components.

The composition according to the present invention ffacilitates faster repair and recycling of battery modules in electric vehicles.

The above-described compositions according to the present invention are applied to the material layer(s) and then cured *in situ.* Prior to applying the compositions, it is often advisable to pre-treat the relevant surfaces to remove foreign matter there from: this step can, if applicable, facilitate the subsequent adhesion of the compositions thereto. Such treatments are known in the art and can be performed in a single or multi-stage manner constituted by, for instance, the use of one or more of: an etching treatment with an acid suitable for the substrate and optionally an oxidizing agent; sonication; plasma treatment, including chemical plasma treatment, corona treatment, atmospheric plasma treatment and flame plasma treatment; immersion in a waterborne alkaline degreasing bath; treatment with a waterborne cleaning emulsion; treatment with a cleaning solvent, such as carbon tetrachloride or trichloroethylene; and, water rinsing, preferably with deionized or demineralized water. In those instances where a waterborne alkaline degreasing bath is used, any of the degreasing agent remaining on the surface should desirably be removed by rinsing the substrate surface with deionized or demineralized water.

The compositions are then applied to the preferably pre-treated surfaces of the substrate by conventional application methods such as: brushing; roll coating using, for example, a 4-application roll equipment where the composition is solvent-free or a 2-application roll equipment for solvent-containing compositions; doctor-blade application; printing methods; and, spraying methods, including but not limited to air-atomized spray, air-assisted spray, airless spray and high-volume low-pressure spray.

The present invention relates to a bonded structure comprising: a first material layer having an electrically conductive surface; and a second material layer having an electrically conductive surface; wherein the curable and debondable two-part thermally conductive adhesive composition according to the present invention is disposed between the first and second material layers. To produce such a structure, the adhesive composition may be applied to at least one internal surface of the first and / or second material layer and the two layers then subsequently contacted, such that the curable and debondable adhesive composition according to the present invention is interposed between the two layers.

It is recommended that the compositions be applied to a surface at a wet film thickness of from 10 to 1000 µm. The application of thinner layers within this range is more economical and provides for a reduced likelihood of deleterious thick cured regions. However, great control must be exercised in applying thinner coatings or layers so as to avoid the formation of discontinuous cured films.

The curing of the applied compositions according to the invention typically occurs at temperatures in the range of from 35°C to 120°C, preferably from 40°C to 100°C, and in particular from 45 to 75°C. The temperature that is suitable depends on the specific compounds present and the desired curing rate and can be determined in the individual case by the skilled artisan, using simple preliminary tests if necessary. Of course, curing at lower temperatures within the afore mentioned ranges is advantageous as it obviates the requirement to substantially heat or cool the mixture from the usually prevailing ambient temperature. Where applicable, however, the temperature of the mixture formed from the respective parts of a two-part composition may be raised above the mixing temperature and / or the application temperature using conventional means including microwave induction.

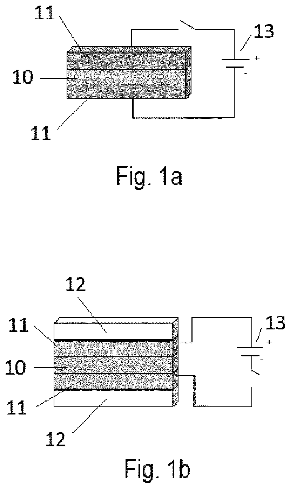

As shown in Figure 1a appended hereto, a bonded structure is provided in which a layer of cured adhesive (10) is disposed between two conductive substrates (11). A layer of non-conductive material (12) may be disposed on the conductive substrates (11) to form the more complex bonded structure as illustrated in Figure 1b. Each layer of conductive substrate (11) is in electrical contact with an electrical power source (13) which may be a battery or an AC-driven source of direct current (DC). The positive and negative terminals of that power source (13) are shown in one fixed position, but the skilled artisan will of course recognize that the polarity of the system can be reversed.

The two conductive substrates (11) are shown in the form of a layer which may be constituted by *inter alia*: a metallic film; a metallic sheet; a metallic mesh or grid; deposited metal particles; a resinous material which is rendered conductive by virtue of conductive elements disposed therein; or, a conducting oxide layer. As exemplary conductive elements there may be mentioned silver filaments, single-walled carbon nanotubes and multi-walled carbon nanotubes. As exemplary conducting oxides there may be mentioned: doped indium oxides, such as indium tin oxide (ITO); doped zinc oxide; antimony tin oxide; cadmium stannate; and, zinc stannate. The selection of the conductive material aside, the skilled artisan will recognize that the efficacy of the debonding operation may be diminished where the conductive substrates (11) are in the form of a grid or mesh which offers limited contact with the layer of cured adhesive (10).

The present invention also relates to a method of debonding said bonded structure according to the present invention, the method comprising the steps of: i) applying a voltage across both surfaces to form an anodic interface and a cathodic interface; and, ii) debonding the surfaces.

When an electrical voltage is applied between each conductive substrate (11), current is supplied to the adhesive composition (10) disposed there between. This induces electrochemical reactions at the interface of the substrates (11) and the adhesive composition, which electrochemical reactions are understood as oxidative at the positively charged or anodic interface and reductive at the negatively charged or cathodic interface. The reactions are considered to weaken the adhesive bond between the substrates allowing the easy removal of the debondable composition from the substrate.

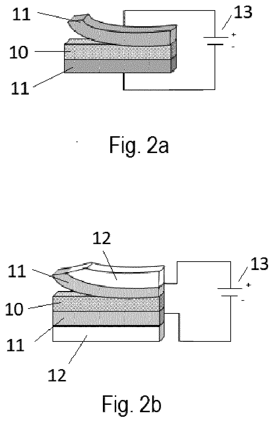

As illustrated in Figures 2a and 2b, the debonding occurs at the positive interface, that interface between the adhesive composition (10) and the electrically conductive surface (11) that is in electrical contact with the positive electrode. By reversing current direction prior to separation of the substrates, the adhesive bond may be weakened at both substrate interfaces.

It is however noted that the composition of the adhesive layer (10) may be moderated so that debonding occurs at either the positive or negative interface or simultaneously from both. For some embodiments a voltage applied across both surfaces so as to form an anodic interface and a cathodic interface will cause debonding to occur simultaneously at both the anodic and cathodic adhesive / substrate interfaces. In an alternative embodiment, reversed polarity may be used to simultaneously disbond both substrate / adhesive interfaces if the composition does not respond at both interfaces to direct current. The current can be applied with any suitable waveform, provided that sufficient total time at each polarity is allowed for debonding to occur. Sinusoidal, rectangular and triangular waveforms might be appropriate in this regard and may be applied from a controlled voltage or a controlled current source.

Without intention to limit the present invention, it is considered that the debonding operation may be performed effectively where at least one and preferably both of the following conditions are instigated: a) an applied voltage of from 0.5 to 100 V; and, b) the voltage being applied for a duration of from 1 second to 60 minutes. Where the release of the conductive substrate from the cured adhesive is to be facilitated by the application of a force - exerted via a weight or a spring, for instance -the potential might only need to be applied for the order of seconds. In some embodiments potential of 5V for a duration of 10 minutes is sufficient to have a debonding effect, whereas in some embodiments, potential of 3.5V for a duration of 30 minutes is sufficient.

It is desired that after the debonding, the adhesive composition is solely on a first substrate or a second substrate, meaning that one of the substrates is substantially free of adhesive.

The composition according to the present invention may be used in all applications which require thermal management and are composed of two electrically conductive substrates. For electric vehicles between cooling plate and cell or cooling plate and module or battery case and lid, for electronic components like adas sensors, e.g. cameras, lidars, radars or power converters or hand held devices, cell phones, tablets etc.

The following examples are illustrative of the present invention and are not intended to limit the scope of the invention in any way.

### Examples

The compositions were prepared in accordance with table 1. The compositions of the examples 1 - 9 and comparative example 1 were prepared by mixing the components together and shortly prior to use the first and second parts were mixed together.

The application substrate for all the formulations was aluminium (AA3003). Aluminium was cut into pieces of 2.5 cm × 10 cm in size and 2.0 mm in thickness. SBR tape was used as spacer to control the thickness of the coating composition applied between two substrates. Tensile lap shear (TLS) was measured according to EN 1465:2009 (German version) Based on Adhesives - Determination of tensile lap-shear strength of bonded assemblies at room temperature.

The bond overlapping area for each stated substrate was 2.5 cm × 2.0 cm with a bond thickness of 1 mm (40 mil) and a bondline width of 1.0 cm. The applied adhesive compositions were cured in the overlapping region by the application of a temperature of 60 °C for 48 hours. The bonded structures were subsequently stored at room temperature for 24 hours prior to initial tensile testing. Tensile lap shear strength values were measured after 24 hours storage period both prior and subsequent application of a constant potential of 30 V across the adhesive layer for a duration of 20 minutes.

Lap Shear Test [MPa] was measured according to ISO 4587-03.

Thermal Conductivity [W/mK] was measured according to ASTM D5930-01.

Volume resistivity (VR) was measured according to following test method: Samples were prepared for the compositions according to the examples above and deposited on a glass plate (by drawing down a strip of material onto the surface of a glass slide with strip dimensions of about 5 cm in length, 5 mm in width and about 50 microns in thickness) and cured and dried (for 15 minutes at 150°C in a box oven). Glass plates were cooled to room temperature, before measurement.

Volume resistivity was calculated from equation VR = (width of the sample (cm) × thickness of the sample (cm) × Resistance (Ohm)) / length of the sample (cm). Where the resistance in ohm was measured by using a Keithley 2010 multimeter and a 2-point resistance probe. Volume resistivity units are reported in Ohm/cm.

**Table 1**

| Raw material FIRST PART | Comparative example 1 | Example 1 | Example 2 | Example 3 | Example 4 | Example 5 | Example 6 | Example 7 | Example 8 | Example 9 |
|---|---|---|---|---|---|---|---|---|---|---|
| Kukdo YD 128 from Kukdo Chemical (Kinshan) Co. Ltd. | 6.2819 | 6.2819 | 6.2819 | 6.2819 | 6.2819 | 6.2819 | 6.2819 | 6.2819 | 6.2819 | 6.2819 |
| Kane Ace^{™} MX-154 from Kaneka | 3.7715 | 3.7715 | 3.7715 | 3.7715 | 3.7715 | 3.7715 | 3.7715 | 3.7715 | 3.7715 | 3.7715 |
| Cardolite NC 513 from Cardolite | 6.6184 | 6.6184 | 6.6184 | 6.6184 | 6.6184 | 6.6184 | 6.6184 | 6.6184 | 6.6184 | 6.6184 |
| Silquest A-187 ftom Momentive Performance Materials | 0.2522 | 0.2522 | 0.2522 | 0.2522 | 0.2522 | 0.2522 | 0.2522 | 0.2522 | 0.2522 | 0.2522 |
| CYPHOS IL 169 from Solvay | 0 | 6 | 6 | 2 | 6 | 12 | 12 | 12 | 0 | 0 |
| EMIM-MS from Basionics | 0 | 0 | 0 | 0 | 0 | 0 | 0 | 0 | 6 | 0 |
| Ethaline from Henkel | 0 | 0 | 0 | 0 | 0 | 0 | 0 | 0 | 0 | 15 |
| CAB-O-SIL^{®} TS-720 from Cabot | 0.052 | 0.052 | 0.052 | 0.052 | 0.052 | 0.052 | 0.052 | 0.052 | 0.052 | 0.052 |
| Martinal TM 2590 from Huber Martinswerk | 16.6 | 15.3648 | 15.3648 | 16.1648 | 9.404 | 13.2048 | 14.1648 | 14.1648 | 15,3648 | 13.5648 |
| SFADW-45 from CMP Advanced materials | 66.4 | 61.4592 | 61.4592 | 64.6592 | 37.616 | 52.8192 | 56.6592 | 56.6592 | 61,4592 | 54.2592 |
| MONARCH 460 from Cabot | 0.024 | 0 | 0 | 0 | 0 | 0 | 0 | 0 | 0 | 0 |
| GPX801 from Cabot | 0 | 0.2 | 0.1 | 0.2 | 0 | 0 | 0 | 0 | 0.2 | 0.2 |
| SG 22 from Unimate | 0 | 0 | 0 | 0 | 30 | 0 | 0 | 0 | 0 | 0 |
| TIMREX C-THERM 011 from Imerys | 0 | 0 | 0 | 0 | 0 | 5 | 0 | 0 | 0 | 0 |
| Lucan BT1001 M from LG Chem | 0 | 0 | 0 | 0 | 0 | 0 | 0.2 | 0 | 0 | 0 |
| LUCAN BT1003M from LG Chem | 0 | 0 | 0 | 0 | 0 | 0 | 0 | 0.2 | 0 | 0 |
| | | | | | | | | | | |

| Raw Material SECOND PART | Comparative Example 1 | Example 1 | Example 2 | Example 3 | Example 4 | Example 5 | Example 6 | Example 7 | Example 8 | Example 9 |
|---|---|---|---|---|---|---|---|---|---|---|
| ANCAMIDE 910 from Evonik | 13.7765 | 13.7765 | 13.7765 | 13.7765 | 13.7765 | 13.7765 | 13.7765 | 13.7765 | 13.7765 | 13.7765 |
| Ancamine K 54 from Evonik | 0.395 | 0.395 | 0.395 | 0.395 | 0.395 | 0.395 | 0.395 | 0.395 | 0.395 | 0.395 |
| CAB-O-SIL^{®} TS-720 from Cabot | 0.1847 | 0.1847 | 0.1847 | 0.1847 | 0.1847 | 0.1847 | 0.1847 | 0.1847 | 0.1847 | 0.1847 |
| Martinal TM 2590 from Huber Martinswerk | 17.1288 | 17.1288 | 17.1288 | 17.1288 | 17.1288 | 17.1288 | 17.1288 | 17.1288 | 17.1288 | 17.1288 |
| SFADW-45 from CMP Advanced Matarials | 68.515 | 68.515 | 68.515 | 68.515 | 68.515 | 68.515 | 68.515 | 68.515 | 68.515 | 68.515 |
| SG 22 from Unimate | 0 | 0 | 0 | 0 | 0 | | 0 | 0 | 0 | 0 |
| TIMREX C-THERM 011 from Imerys | 0 | 0 | 0 | 0 | 0 | 0 | 0 | 0 | 0 | 0 |
| | | | | | | | | | | |
| Mixing Ratio Part A/Part B (per weight) | 1:1 | 1:1 | 1:1 | 1:1 | 1:1 | 1:1 | 1:1 | 1:1 | 1:1 | 1:1 |
| | | | | | | | | | | |
| Filler Content (in %) | 84.32 | 81.23 | 81.23 | 83.23 | 81.33 | 78.33 | 78.33 | 78.33 | 81.23 | 76.73 |
| Ionic Liquid Content (in %) | 0 | 3 | 3 | 1 | 3 | 6 | 6 | 6 | 3 | 7.5 |
| Conductive Filler Content (in %) | 0 | 0.1 | 0.05 | 0.1 | 15 | 2.5 | 0.1 | 0.1 | 0.1 | 0.1 |
| | | | | | | | | | | |

| Properties | Comparative EX1 | Example 1 | Example 2 | Example 3 | Example 4 | Example 5 | Example 6 | Example 7 | Example 8 | Example 9 |
|---|---|---|---|---|---|---|---|---|---|---|
| Lap Shear Test (before voltage) [MPa] | 6.72 | 3.45 | 3.23 | 3.45 | 4.23 | 2.43 | 1.87 | 1.79 | 4.14 | 2.7 |
| Lap Shear Test (after voltage) [MPa] | 6.63 | 0.27 | 0.84 | 0.27 | 1.07 | 1.21 | 0.92 | 0.86 | 0.99 | 0.27 |
| Thermal Conductivity [W/mK] | 1.88 | 1.69 | 1.46 | 1.69 | 2.58 | 2.27 | 1.35 | 1.25 | 1.89 | 1.5 |
| Volume resistivity (in Ω/cm) | 1.00E+09 | 4.82E+04 | 2.93E+04 | 4.82E+04 | 5.98E+05 | 2.10E+06 | 7.57E+05 | 1.93E+06 | 1.54E+04 | 3.80E+04 |

The compositions according to the present invention provided good thermal conductivity and resistance. Further, the compositions provided good initial adhesion strength and were debonded once the voltage was applied. Indeed, the lap shear strength of the adhesives according to the present invention could be lowered by >50% of initial the adhesion strength while simultaneously adhesives exhibited good thermal conductivity.

## Claims

1. A curable and debondable two-part thermally conductive adhesive composition comprising
a first part comprising
a) an epoxy resin;
b) from 0.1 to 20% by weight based on the total weight of the first part of an electrolyte, wherein the electrolyte is selected from the group consisting of 1-ethyl-3-methyl-imidazolium methyl sulfate, tributyl(ethyl)phosphonium diethyl phosphate, mixture of choline chloride and ethylene glycol and mixtures thereof; and
c) a thermally conductive filler; and
a second part comprising
a) a curing agent;
b) a thermally conductive filler,
wherein the composition further comprises an electrically conductive filler, wherein the electrically conductive filler is one of
i) from 0.02 to 0.3% by weight based on the total weight of the composition of carbon nanostructures or carbon nanotubes; or
ii) from 12 to 17% by weight based on the total weight of the composition of spherical graphite; or
iii) from 1 to 4% by weight based on the total weight of the composition of graphite flakes.

2. The curable and debondable two-part thermally conductive adhesive composition according to claim 1, wherein the epoxy resin is selected from the group consisting of bis-phenol A epoxy resin, bis-phenol F epoxy resin, mixture of bis-phenol A epoxy resin and bis-phenol F epoxy resin, cycloaliphatic epoxy resin and mixtures thereof, preferably the epoxy resin is bis-phenol A epoxy resin.

3. The curable and debondable two-part thermally conductive adhesive composition according to claim 1 or 2, wherein the epoxy resin is present in an amount from 2 to 10% by weight of the total weight of the first part, preferably from 3 to 9% and more preferably from 4 to 8%.

4. The curable and debondable two-part thermally conductive adhesive composition according to claim 1 or 3, wherein the electrolyte is present in an amount from 0.5 to 18% by weight of the total weight of the first part, preferably from 0.75 to 17% and more preferably from 1 to 16%.

5. The curable and debondable two-part thermally conductive adhesive composition according to any one of claims 1 to 4, wherein the thermally conductive filler in the first part and the thermally conductive filler in the second part can be same or different and are independently selected from the group consisting of aluminium hydroxide, aluminium oxide, aluminium oxide-hydroxide, boron nitride, magnesia, zinc oxide, graphene, graphite, silica, fumed silica, talc, chalk, calcium carbonate and mixtures thereof, preferably the thermally conductive filler is selected from aluminium hydroxide, aluminium oxide and mixtures thereof.

6. The curable and debondable two-part thermally conductive adhesive composition according to any one of claims 1 to 5, wherein the filler is present in the first part in an amount of from 40 to 90 by weight of the total weight of the first part, preferably from 42 to 87% and more preferably from 45 to 83%; and wherein the filler is present in the second part in an amount of from 70 to 90% by weight of the total weight of the second part, preferably from 80 to 90%, and more preferably from 83 to 88%.

7. The curable and debondable two-part thermally conductive adhesive composition according to any one of claims 1 to 6, wherein the curing agent is selected from the group consisting of polyamides, tertiary polyamides, polyamines, poly(amidoamines), polyetheramines and mixtures thereof.

8. The curable and debondable two-part thermally conductive adhesive composition according to claim 1 or 7, wherein the curing agent is present in an amount from 10 to 20% by weight of the total weight of the second part, preferably from 11 to 18% and more preferably from 12 to 16%.

9. The curable and debondable two-part thermally conductive adhesive composition according to any one of claims 1 to 8, wherein the composition further comprises core shell rubber particles, and wherein the core shell rubber particles are preferable present in an amount from 0.1 to 10% by weight of the total weight of the first part or a second part of the composition, preferably from 0.5 to 8% and more preferably from 1 to 7%.

10. The curable and debondable two-part thermally conductive adhesive composition according to any one of claims 1 to 9, wherein the composition further comprises a reactive diluent, and wherein the reactive diluent is preferable present in an amount from 1 to 15% by weight of the total weight of the first part or a second part, preferably from 2 to 12% and more preferably from 3 to 7%.

11. The curable and debondable two-part thermally conductive adhesive composition according to any one of claims 1 to 10, wherein the composition further comprises a silane coupling agent, and wherein the silane coupling agent is preferable present in an amount from 0.01 to 3% by weight of the total weight of the first part or a second part, preferably from 0.05 to 2% and more preferably from 0.1 to 1%.

12. The curable and debondable two-part thermally conductive adhesive composition according to any one of claims 1 to 11, wherein the electrically conductive filler is one of
i) from 0.03 to 0.2% by weight based on the total weight of the composition of carbon nanostructures or carbon nanotubes; or
ii) from 13 to 16% by weight based on the total weight of the composition of spherical graphite; or
iii) from 1.5 to 3.5% by weight based on the total weight of the composition of graphite flakes.

13. The curable and debondable two-part thermally conductive adhesive composition according to any one of claims 1 to 12, wherein the first part and the second part are mixed in ratio of from 1.1:1 to 1:1.1, preferably from 1.05:1 to 1:1.05 and more preferably 1:1, wherein the ratio is a stoichiometric ratio.

14. Use of a curable and debondable two-part thermally conductive adhesive composition according any of the claims 1 to 13 in battery modules of electric vehicles, electronic devices, and electronic components.

15. A bonded structure comprising:
a first material layer having an electrically conductive surface; and,
a second material layer having an electrically conductive surface;
wherein the curable and debondable two-part thermally conductive adhesive composition according to any one of claims 1 to 13 is disposed between the first and second material layers.

16. A method of debonding said bonded structure according to claim 15, the method comprising the steps of:
i) applying a voltage across both surfaces to form an anodic interface and a cathodic interface; and,
ii) debonding the surfaces.
